# FASCICULE DE BREVET EUROPEEN

(11) **EP 1 259 385 B1**
(45) Date de publication et mention de la délivrance du brevet: **06.05.2009**
(21) Numéro de dépôt: 01909917.5
(22) Date de dépôt: 28.02.2001
(51) Int. Cl.: B43K 8/02, C09D 11/16, B43K 1/00, B43K 15/02

(54) **ARTICLE D'ECRITURE DONT LA POINTE D'ECRITURE COMPORTE UN AGENT RETARDATEUR DE SECHAGE ET PROCEDE DE FABRICATION D'UNE TELLE POINTE**
SCHREIBGERÄT MIT EINER SCHREIBSPITZE DIE EIN AUSTROCKNUNG HEMMENDES MITTEL ENTHÄLT UND VERFAHREN ZUR HERSTELLUNG EINER SOLCHEN SPITZE
WRITING IMPLEMENT WHEREOF THE WRITING NIB COMPRISES A RETARDER AND METHOD FOR MAKING SAME

(30) Priorité: 02.03.2000 FR 0002705; 19.12.2000 FR 0016611
(43) Date de publication de la demande: 27.11.2002
(73) Titulaire: CONTE S.A., 62205 Boulogne sur Mer Cédex (FR)
(72) Inventeur: DUEZ, José, F-62280 St Martin Boulogne (FR); BEDHOME, Vincent, F-62240 Desvres (FR)
(74) Mandataire: Hennion, Jean-Claude
(86) Numéro de dépôt international: PCT/FR2001/000575
(87) Numéro de publication internationale: WO 2001/064453

(56) Documents cités:
- EP-A- 0 344 379
- EP-A- 0 516 538
- FR-A- 2 684 602
- US-A- 3 111 702

## Description

La présente invention concerne le domaine des articles d'écriture, plus particulièrement des articles qui comportent une pointe d'écriture capillaire assurant le transfert de l'encre depuis un réservoir, fibreux ou non,jusqu'à l'extrémité de ladite pointe, faisant office de tête d'écriture.

L'extrémité de la pointe de l'écriture, faisant office de tête d'écriture, est nécessairement en saillie par rapport au corps de l'article que tient l'utilisateur lorsqu'il écrit. L'encre consommée sur le support est remplacée au fur et à mesure par de l'encre provenant du réservoir et transférée par capillarité dans la pointe d'écriture. Lorsque l'article n'est plus utilisé, un capuchon est emboîté sur le corps de l'article, de manière à recouvrir la pointe d'écriture d'une part, pour la protéger des chocs éventuels et d'autre part, pour éviter son séchage. En effet, si l'extrémité en saillie de la pointe d'écriture reste à l'air libre, le solvant de l'encre qui se trouve dans cette extrémité s'évapore tandis que les divers composants contenus par cet encre y demeurent. Il peut de ce fait, se produire un colmatage de la tête d'écriture par les composants de l'encre, ce qui peut poser des difficultés lors de la réutilisation de l'article voire même rendre impossible cette réutilisation du fait de l'insolubilité dans le solvant de l'encre des composants ayant provoqué le colmatage , et ce, quand bien même il resterait une quantité importante d'encre dans le réservoir.

Pour éviter cet inconvénient, les producteurs d'article d'écriture cherchent à augmenter le « cap off time », terme utilisé pour désigner la durée possible de séjour d'un article d'écriture sans que la pointe soit revêtue de son capuchon et sans que cela présente un inconvénient majeur lors de la réutilisation de l'article.

Une solution a déjà été préconisée qui consiste dans la modification de la composition de l'encre, en ajoutant un additif retardateur de séchage, notamment du type filmogène (voir par exemple EP-A-0344379). Lorsque la pointe d'écriture, imprégnée de son encre, reste un temps important à l'air libre, le solvant de l'encre s'évapore et il se forme en surface de ladite pointe, grâce à la présence de cet additif, une peau ou un film qui limite la poursuite de l'évaporation ; cette peau ou ce film a une résistance mécanique très faible de sorte qu'elle/il est éliminé lorsque l'utilisateur applique de nouveau la pointe d'écriture sur le support.

Cette solution permet d'améliorer la durée de séjour à l'air libre de la pointe dans des proportions importantes. Cependant, sa mise en oeuvre n'est pas sans poser de difficultés. En effet, le phénomène de séchage de la pointe est principalement important pour les articles dont l'encre est à base de solvant alcoolique. Or les additifs filmogènes susceptibles de convenir sont peu solubles ou dispersibles dans ces solvants, de sorte que lors du montage de l'article, il est généralement nécessaire de chauffer l'encre pour obtenir la solubilisation ou dispersion suffisante de l'additif.

Le but que s'est fixé le demandeur est de proposer un article d'écriture qui pallie l'inconvénient précité en augmentant de manière conséquente, la durée possible de séjour à l'air libre de la pointe d'écriture, sans effet rédhibitoire pour l'utilisation de l'article et sans qu'il soit nécessaire de modifier la composition de l'encre et/ou les conditions opératoires habituelles lors du montage de l'article.

Ce but est parfaitement atteint par l'article d'écriture de l'invention qui de manière connue comporte de l'encre dans un réservoir,fibreux ou non, un agent retardateur de séchage soluble ou dispersible dans l'encre et une pointe d'écriture apte à transférer l'encre depuis le réservoir jusqu'au support d'écriture. De manière caractéristique, un agent retardateur de séchage est inclus dans la pointe d'écriture et est apte à être entraîné par l'encre lors de son transfert dans ladite pointe.L'expression « un agent retardateur de séchage » utilisé dans le présent texte n'est pas limitée à un seul agent , mais comprend également un mélange de plusieurs agents retardateurs de séchage.

Lors du transfert de l'encre dans la pointe d'écriture, l'agent retardateur de séchage qui se trouve dans la pointe d'écriture est entraîné au fur et à mesure par l'encre de sorte que lorsque ladite encre arrive au niveau de l'extrémité de la pointe qui fait office de tête d'écriture, l'encre contient suffisamment d'agent retardateur pour qu'en cas de séchage par évaporation du solvant de l'encre, il se forme une peau ou un film à la surface de ladite tête d'écriture, limitant la poursuite de l'évaporation.

De préférence, la quantité d'agent retardateur de séchage inclus dans la pointe d'écriture est déterminée en fonction de la capacité de l'encre à entraîner ledit agent, de la quantité d'encre contenue dans le réservoir et éventuellement de la quantité d'agent retardateur contenu dans l'encre en sorte qu'il reste de l'agent retardateur de séchage dans la pointe d'écriture lorsque le réservoir est vide d'encre. Ceci a pour but d'obtenir le résultat recherché pendant toute le durée de vie de l'article d'écriture. Bien sûr l'encre, contenue dans le réservoir peut être totalement exempte d'agent retardateur , mais elle peut aussi contenir un agent retardateur à faible concentration, fonction de la limite de solubilité ou de dispersion de cet agent dans le solvant de l'encre à température ambiante . On évite ainsi la nécessité de chauffer l'encre lors de la production de l'article. De manière avantageuse , cela évite d'avoir à inclure une trop grande quantité d'agent retardateur dans la pointe d'écriture et aussi permet de mettre en oeuvre des agents retardateurs différents, par exemple un agent dispersible dans le solvant de l'encre dans l'encre du réservoir et un agent soluble dans ledit solvant dans la pointe d'écriture.

Le choix de l'agent retardateur de séchage est bien sûr fonction du type de solvant qui est utilisé pour l'encre. Certains agents sont compatibles uniquement avec des encres à base d'eau, d'autres sont compatibles uniquement avec des encres à base de solvant alcoolique, d'autres enfin sont compatibles avec ces deux types de solvant. Une encre est dite « à base » d'eau (ou d'un solvant alcoolique) lorsque l'eau (ou l'alcool) est son solvant majoritaire , ce qui n'exclut pas l'utilisation minoritaire d'autres solvants.

Parmi les agents retardateurs de séchage, compatibles avec les encres à base d'eau, on peut citer : N-phénylurée, N-éthylurée, thiourée, éthylène thiourée, diéthylèneglycol, propylèneglycol, polypropylèneglycol, un mélange de propylèneglycol et de polyglycol, sorbitol et glycérine.

Parmi les agents retardateurs de séchage qui sont compatibles avec des encres à base de solvant alcoolique, on peut citer : cire de paraffine, cire de polyéthylène, éthylène glycol, cétyl stéarate, cétyl palmitate, stéaryl stéarate, myristate de Myristile et de manière préférée l'ester de sorbitan (monostéarate sorbitan).

Parmi les agents retardateurs de séchage, qui sont compatibles à la fois avec les encres à base d'eau et les encres à base de solvant alcoolique, on peut citer : cire d'abeille, cire de Carnauba.

C'est un autre objet de l'invention que de proposer un procédé de fabrication d'une pointe d'écriture, spécialement conçue pour être mise en oeuvre dans l'article d'écriture précité. Ce procédé comporte les étapes suivantes :
a)Imprégnation en continu d'un élément longiforme de grande capillarité par un bain contenant une quantité déterminée d'un agent retardateur de séchage en sorte d'obtenir une répartition homogène dans la section transversale de l'élément longiforme dudit bain,
b)Séchage de l'élément longiforme imprégné,
c)Tronçonnage et usinage.

De préférence, le bain d'imprégnation est une solution concentrée de l'agent retardateur de séchage, tandis que l'encre de l'article d'écriture est une encre à base d'un solvant dans lequel l'agent retardateur de séchage est faiblement soluble. Ainsi il est possible, en mettant en oeuvre un bain d'imprégnation concentrée voire très concentré, d'inclure dans l'élément longiforme destiné à former la pointe d'écriture, une grande quantité d'agent retardateur. Lors du transfert de l'encre dans la pointe d'écriture, l'encre n'entraînera qu'une faible proportion d'agent retardateur, fonction de la limite de solubilité de cet agent dans le solvant de l'encre.

Dans certains cas une forte concentration d'agent retardateur peut augmenter la viscosité du bain d'imprégnation dans des proportions telles que la diffusion du bain dans l'élément longiforme sera particulièrement lente, voire limitée, et qu'il sera difficile dans des conditions industrielles d'obtenir une répartition homogène du bain dans toute la section transversale dudit élément. Dans un tel cas , selon le procédé de l'invention, on met en oeuvre un bain moins concentré et on procède à une pluralité d'étapes d'imprégnation (a) et de séchage (b) jusqu'à obtenir la quantité voulue d'agent retardateur de séchage inclus dans l'élément longiforme.

Dans un mode préféré de réalisation, l'agent retardateur de séchage inclus dans la pointe d'écriture est localisé majoritairement dans la périphérie de ladite pointe. Il a été en effet constaté que dans ce cas il était possible de diminuer de manière importante la quantité totale d'agent retardateur de séchage qui était nécessaire pour obtenir la même efficacité.

Il est proposé un procédé de fabrication d'une pointe d'écriture qui est spécialement conçu pour obtenir la localisation en périphérie de l'agent retardateur de séchage . Ce procédé comporte les étapes suivantes :
a) imprégnation d'une pointe d'écriture préalablement usinée par un bain d'imprégnation contenant une quantité déterminée d'un agent retardateur de séchage et
b) séchage de la pointe d'écriture ainsi imprégnée , sous agitation ,par un chauffage à une température inférieure ou égale à 60°C.

Le fait de réaliser l'imprégnation sur la pointe d'écriture préalablement usinée présente deux avantages. D'une part il n'y a pas de risque d'encrassement des matériels d'usinage et en particulier des meules , encrassement qui peut se produire lorsqu'on tronçonne et usine l'élément longiforme dans lequel on a déjà inclus l'agent retardateur de séchage. D'autre part on limite les pertes d'agent retardateur de séchage dues à cet usinage.

Même si à l'issue de l'imprégnation par le bain l'agent retardateur de séchage a diffusé de manière homogène dans toute la pointe d'écriture , il s'avère que le séchage par un chauffage à température modérée, notamment inférieure à 60°C, entraîne une diffusion du bain d'imprégnation, y compris l'agent retardateur de séchage vers la périphérie de la pointe d'écriture. Pour qu'il n'y ait pas d'hétérogénéité dans cette localisation du fait notamment du contact des pointes d'écriture entre-elles lors du séchage , il est nécessaire que celui-ci soit fait sous agitation mécanique des pointes d'écriture.

Cette concentration de l'agent retardateur de séchage en périphérie de la pointe d'écriture permet d'augmenter l'efficacité de l'entraînement par l'encre dudit agent retardateur. C'est ainsi qu'il a été possible comparativement au premier procédé précité de mettre en oeuvre un bain d'imprégnation ayant une concentration en agent retardateur de séchage beaucoup plus faible , de 0,05% à 2%. Dans un exemple préféré de réalisation, le bain d'imprégnation formé à partir d'un mélange eau/alcool (50/50) comprenait de 0,1 à 0,5% en poids d'ester de sorbitan.

Il a également été remarqué que lorsque l'agent retardateur de séchage est solide à température ambiante , il est préférable que le bain d'imprégnation soit porté à une température suffisante pour obtenir une solution claire, ce qui permet une bonne imprégnation par le bain, sans filtration. Par exemple s'agissant de l'ester de sorbitan, la température du bain était de l'ordre ou supérieure à 35°C.

La présente invention sera mieux comprise à la lecture de la description qui va être faite d'un article d'écriture dont la pointe comporte un agent retardateur de séchage et du procédé de fabrication d'une telle pointe d'écriture, illustré par le dessin annexé dans lequel
Les figures 1 et 2 sont des représentations schématiques en coupe de deux exemples d'article d'écriture.
La figure 3 est une représentation schématique de certaines étapes du procédé de fabrication de la pointe d'écriture.

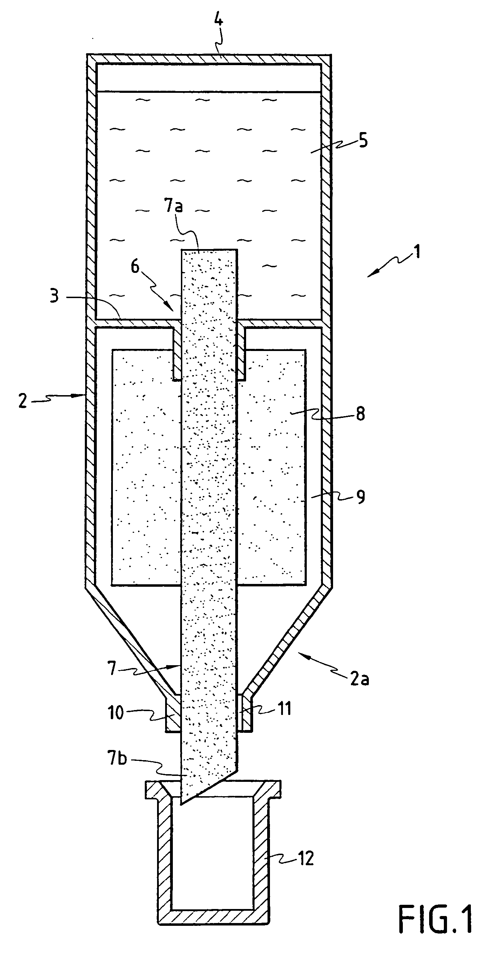

Le premier exemple d'article d'écriture 1 illustré à la figure 1 comporte un corps 2 de forme globalement cylindrique ayant une cloison intérieure 3 délimitant, vers l'arrière, un réservoir 4 pour l'encre liquide 5. Cette cloison 3 est percée d'une ouverture 6, laquelle est obturée par une pointe d'écriture 7 dont l'extrémité arrière 7a débouche dans le réservoir 4 et dont l'extrémité avant 7b débouche en dehors du corps 2 de l'article 1 et forme la tête d'écriture dudit article. Dans l'exemple illustré, l'article 1 comporte également un réservoir tampon 8 qui est disposé dans le compartiment avant 9 du corps 2 autour de la pointe 7. Ce réservoir tampon qui est en contact avec la pointe 7 a pour fonction d'absorber temporairement l'excès d'encre qui est susceptible d'être transféré dans la pointe 7 en cas de variation des conditions d'utilisation de l'article 1, notamment en cas d'augmentation de température de l'air dans le réservoir 4. L'encre absorbée par le réservoir tampon 8 est ensuite restituée à la pointe 7 lorsque les conditions sont redevenues normales. Un tel article d'écriture 1 est notamment connu par le document EP.516.538.

L'extrémité 7b de la pointe 7, extrémité qui fait office de tête d'écriture, est en saillie par rapport à la partie avant 2a du corps 2 de l'article 1. Dans l'exemple illustré, cette partie avant a une forme globalement tronconique et est terminée par un embout 10, cylindrique, ayant un évidement central pour le passage de l'extrémité 7b de la pointe 7 et également un orifice latéral 11 pour la circulation d'air depuis l'extérieur vers l'intérieur du compartiment 9.

L'article 1 est également équipé d'un capuchon 12 qui vient s'emboîter sur l'embout 10 pour recouvrir hermétiquement la tête d'écriture de l'article. Ce capuchon 12 a une double fonction, à savoir de protéger la tête d'écriture 7b contre les chocs et d'éviter le séchage de l'encre contenue dans ladite tête d'écriture, séchage qui pourrait s'avérer rédhibitoire s'il provoquait le colmatage de la tête 7b par les composants contenus dans l'encre 5.

Il est connu que pour éviter ce risque de colmatage, on ajoute dans l'encre 5 un agent retardateur de séchage, permettant d'augmenter la durée pendant laquelle la tête d'écriture 7b peut rester découverte, sans protection du capuchon 12, sans que cela soit rédhibitoire pour l'utilisation ultérieure de l'article 1. Cette durée est communément dénommée « cap off time ». L'encre liquide 5 contenant à l'état solubilisé ou de dispersion ledit agent retardateur, diffuse dans la structure poreuse et capillaire de la pointe 7 jusqu'à la tête d'écriture 7b qui est en saillie par rapport à l'embout 10 du corps 2. En cas de séjour prolongé de la tête 7b à l'air libre, le solvant de l'encre qui se trouve superficiellement en périphérie de la tête 7b s'évapore. Lors de cette évaporation, l'agent retardateur, qui reste en place, forme une peau ou un film à l'interface entre l'air extérieur et le solvant. Cette peau ou ce film limite de manière conséquente l'évaporation du solvant, ce qui a pour effet d'augmenter le « cap off time ». Ce film a une très faible résistance mécanique de sorte qu'il s'élimine de lui-même, par frottement contre le support, lors d'une nouvelle utilisation de l'article 1.

Selon la caractéristique de la présente invention, un agent retardateur de séchage est inclus dans la pointe d'écriture 7 en sorte que l'encre 5 se charge de l'agent contenu dans la pointe d'écriture lors de son transfert depuis le réservoir 4 jusqu'à la tête d'écriture 7b. La formation de la peau ou du film au niveau de la tête d'écriture 7b, améliorant le « cap off time », est bien sûr identique à ce qui a été décrit précédemment.

Selon la technique antérieure, les conditions opératoires de fabrication de l'article étaient particulièrement délicates du fait que la préparation de l'encre comportant l'agent retardateur de séchage nécessitait de travailler dans des conditions limites de solubilité ou de dispersion,le plus souvent avec chauffage de l'encre lors de l'assemblage de l'article. Grâce à l'invention, ces difficultés disparaissent, l'encre étant exempte d'agent retardateur, ou contenant une teneur en agent retardateur de séchage inférieure à sa limite de solubilité ou de dispersion à température ambiante.

On comprend que l'agent retardateur qui est inclus dans la pointe d'écriture doit pouvoir être entraîné par l'encre qui diffuse par capillarité dans ladite pointe selon certaines conditions. La première condition est que la concentration en agent retardateur dans l'encre qui arrive au niveau de la tête d'écriture 7b doit être suffisante pour qu'il puisse se former une peau ou un film lors de l'évaporation du solvant. La seconde condition est que l'entraînement par l'encre de l'agent retardateur doit être suffisamment faible, en proportion, pour que l'effet recherché puisse être observé pendant toute la durée de vie de l'article c'est-à-dire tant qu'il reste de l'encre liquide 5 dans le réservoir 4.

Pour obtenir une quantité importante d'agent retardateur, inclus dans la pointe 7, on met en oeuvre un procédé de fabrication qui consiste à imprégner, en continu, un élément longiforme de grande capillarité, par exemple un jonc de fibre acrylique 13, par un bain d'imprégnation 14 concentré en agent retardateur de séchage, puis à sécher le jonc imprégné 13', avant de le tronçonner et de l'usiner pour obtenir la pointe d'écriture 7.

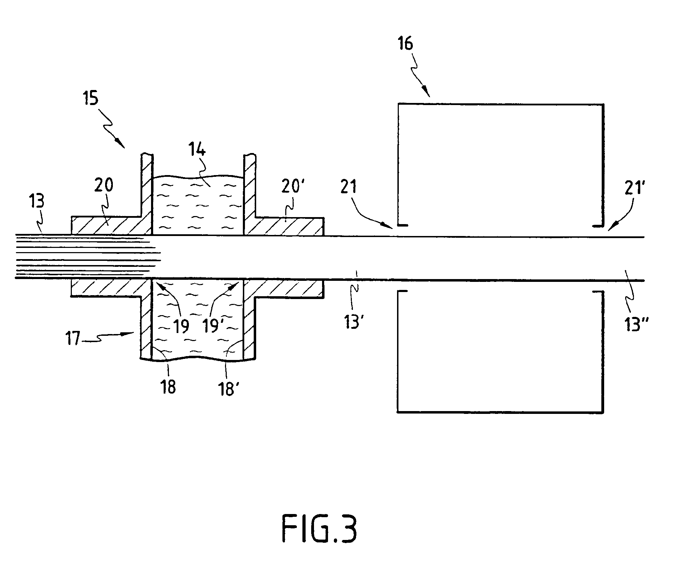

Sur la figure 3 on a représenté très schématiquement les deux phases d'imprégnation et de séchage mises en oeuvre successivement sur le trajet du jonc 13 grâce à une tête d'imprégnation 15 et à un four de séchage 16. Il peut s'agir de tout type de séchage, par conduction , convection ou micro-ondes.

La tête d'imprégnation 15 est constituée d'un réservoir 17 contenant le bain d'imprégnation 14. Les deux parois verticales 18, 18' en regard l'une de l'autre du réservoir 17 sont percées de deux ouvertures 19, 19' exactement conformées comme la section transversale du jonc 13. Chaque ouverture 19, 19' est prolongée vers l'extérieur par un épaulement 20, 20', notamment annulaire lorsque la section transversale du jonc est circulaire.

La mise en oeuvre du procédé se fait en introduisant le jonc 13 à travers les épaulements 20, 20' et les ouvertures 19, 19' de la tête d'imprégnation 15 et à travers les ouvertures 21, 21' du four de séchage 16.

Le jonc est tracté en continu à travers la tête d'imprégnation 15 et le four de séchage 16. La dimension des ouvertures 19 19' et des épaulements 20 20' est ajustée à la section transversale du jonc 13 de manière à ce que le jonc 13 forme lui-même, avec la paroi intérieure des épaulements 20, 20', un joint d'étanchéité, empêchant la sortie directe du bain d'imprégnation 14.

Lors du déplacement continu du jonc 13 à travers la tête d'imprégnation 15, le bain d'imprégnation 14 diffuse naturellement à travers les pores capillaires du jonc 13. Cette diffusion doit se faire de telle sorte qu'au niveau de l'ouverture d'entrée 21 du four de séchage 16, le bain d'imprégnation 14 a diffusé dans toute la section transversale du jonc 13' imprégné.

Après passage dans le four 16, le solvant du bain d'imprégnation 14 est éliminé de sorte que l'agent retardateur se retrouve inclus de manière sensiblement homogène dans toute la section transversale du jonc 13" sortant du four 16. Ce jonc 13" est ensuite tronçonné et usiné pour former la pointe d'écriture 7.

Etant donné que l'on cherche à avoir une quantité importante d'agent retardateur de séchage inclus dans la pointe d'écriture pour obtenir l'effet désiré pendant toute la vie de l'article , il est souhaitable d'utiliser un bain d'imprégnation qui soit concentré voire très concentré en agent retardateur de séchage. Cependant l'augmentation de la concentration peut , du fait de l'augmentation corrélative de la viscosité du bain, empêcher la diffusion dudit bain dans les conditions précitées . Il convient donc de déterminer la concentration adéquate du bain en agent retardateur de séchage pour obtenir la diffusion dans toute la section transversale du jonc à l'entrée du four, quitte à effectuer plusieurs opérations successives d'imprégnation et de séchage pour obtenir finalement la quantité souhaitable d'agent inclus dans l'élément longiforme qui constituera, après tronçonnage et usinage, la pointe d'écriture.

Le solvant du bain d'imprégnation est choisi pour que la concentration adéquate précitée en agent retardateur soit la plus élevée possible . Par contre l'agent retardateur doit avoir une solubilité limitée et contrôlée dans le solvant de l'encre. C'est dans ces conditions que l'on peut obtenir d'une part, une concentration importante de l'agent retardateur dans la pointe d'écriture et d'autre part, un emport limité et continu dudit agent par l'encre diffusant dans la pointe d'écriture lors de l'utilisation de l'article.

Parmi les agents retardateurs de séchage correspondant à cette variante préférée, on a mis en oeuvre les composés suivants :cétyl stéarate, cétyl palmitate, stéaryl stéarate, myristate de Myristile et surtout l'ester de sorbitan.

Il est donné à titre indicatif et non limitatif un exemple de composition de l'encre et de composition du bain d'imprégnation mettant en oeuvre l'ester de sorbitan (monostéarate de sorbitan).

Composition de l'encre :

| | |
|---|---|
| alcool éthylique | 90 % |
| colorants basiques | 5 % |
| résine (butyral polyvinylique) | 5 % |

Composition du bain d'imprégnation :

| | |
|---|---|
| mélange eau/alcool (50/50) | 95 % |
| ester de sorbitan | 5 % |

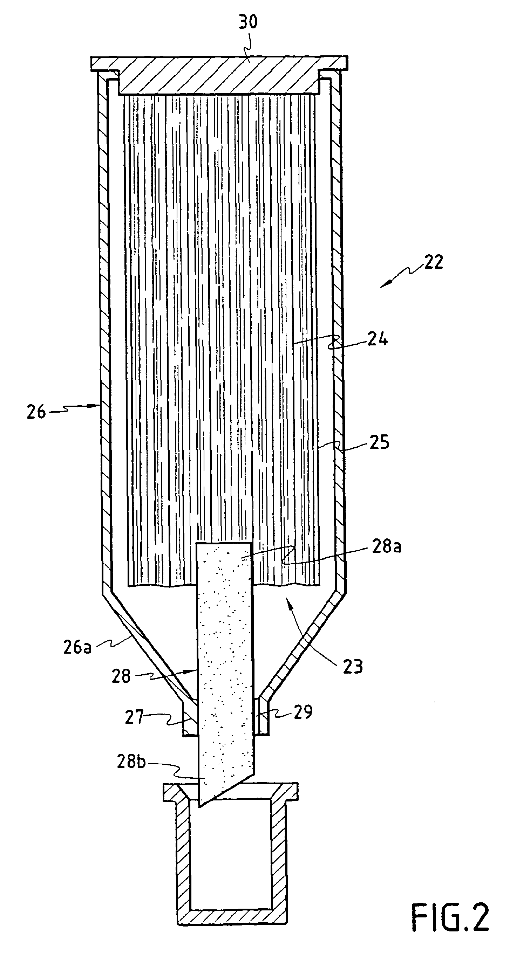

L'article d'écriture 22 qui est illustré à la figure 2 diffère du premier exemple du fait que l'encre n'est à pas à proprement parler à l'état liquide dans un réservoir mais se trouve enfermée dans un réservoir fibreux 23. Ce type de réservoir fibreux est bien connu par ailleurs ; il est constitué généralement d'un faisceau de fibres 24 ayant une direction globalement longitudinale en sorte que les interstices entre les différentes fibres forment des capillaires servant à la fois à l'accumulation et au transfert de l'encre. Ce faisceau de fibres 24 est entouré dans une gaine 25 généralement un film plastique. Le corps cylindrique 26 de l'article 22 est obturé vers l'arrière , par un bouchon 30. La partie avant 26a du corps 26 a une forme globalement tronconique est terminée par un embout 27 , cylindrique, ayant un évidement central pour le passage de l'extrémité 28b de la pointe d'écriture 28 et également un orifice 29 pour la circulation d'air depuis l'extérieur vers l'intérieur du corps 26. Le réservoir fibreux 23 occupe sensiblement l'intégralité du volume intérieur de la partie cylindrique du corps 26. La pointe d'écriture 28 a son extrémité arrière 28a qui pénètre à l'intérieur du faiseau de fibres 24. C'est donc le réservoir fibreux 23 qui alimente en encre la pointe d'écriture 28, ladite encre entraînant, comme dans le premier exemple, l'agent retardateur de séchage qui est inclus dans ladite pointe d'écriture 28 jusqu'à l'extrémité avant 28b de celle-ci qui constitue la tête d'écriture.

Dans l'exemple qui vient d'être décrit, on fait en sorte que l'imprégnation du jonc 13 par le bain 14 se fasse de manière homogène dans toute la section du jonc et également , après séchage du jonc , tronçonnage et usinage, dans toute la section de la pointe d'écriture. Selon le second exemple qui va maintenant être décrit, l'agent retardateur est localisé majoritairement dans la périphérie de la pointe d'écriture , y compris dans les parties qui ont été soumises à l'usinage . Cette concentration de l'agent retardateur de séchage permet d'augmenter l'efficacité de l'élément recherché à savoir d'augmenter le « caf-off time ». Il est vraisemblable que cette concentration d'agent retardateur de séchage en périphérie crée , lors de l'évaporation du solvant de l'encre , un réseau de peaux ou de fils qui obture beaucoup plus efficacement le réseau capillaire de la pointe d'écriture.

Par ailleurs du fait de cette concentration localisée en périphérie , il est possible d'utiliser une quantité beaucoup plus faible d'agent retardateur de séchage pour le même résultat.

Pour réaliser cette concentration localisée en agent retardateur dans la pointe d'écriture , on met en oeuvre un procédé non pas continu comme le procédé déjà décrit précédemment mais un procédé discontinu qui met en oeuvre des pointes d'écriture déjà préalablement tronçonnées et usinées. Ce procédé consiste à plonger les pointes d'écriture préalablement usinées dans un bain d'imprégnation contenant une quantité déterminée d'agent retardateur de séchage puis à sécher lesdites pointes ainsi imprégnées sous agitation avec un séchage traditionnel à une température modérée , notamment inférieure à 60°C. Les conditions de séchage , à température modérée et sous agitation, permettent d'obtenir une diffusion progressive de tout le bain qui avait été imprégné par la pointe d'écriture vers l'extérieur de celle-ci et donc une concentration de l'agent retardateur entraîné lors de cette diffusion dans la périphérie de ladite pointe. Cette concentration est remarquable lorsqu'on réalise une coupe transversale de la pointe après avoir mis en oeuvre un marqueur coloré lié à l'agent retardateur de séchage . On constate effectivement que le marqueur est réparti de façon annulaire dans ladite section, ce qui montre bien la concentration de l'agent retardateur de séchage dans la périphérie de la pointe c'est-à-dire sur une zone qui peut être de quelques dixièmes de millimètres d'épaisseur par rapport à la surface extérieure de la pointe. Au contraire , si l'on met en oeuvre un traitement de séchage du type micro-ondes , on remarque une répartition très homogène du marqueur dans toute la section de la pointe.

Partant du même exemple de composition de l'encre que ce qui a été donné ci-dessus , on a mis en oeuvre comme composition du bain d'imprégnation :
- mélange eau/ alcool (50/50) 99,7%
- ester de sorbitan 0,3%

Ainsi malgré la mise en oeuvre d'un bain d'imprégnation vingt-cinq fois moins concentré en ester de sorbitan, on a obtenu un cap-off time équivalent voire même d'une durée plus importante.

Il est également à noter que l'ester de sorbitan étant solide à température ambiante, le bain d'imprégnation a été chauffé à une température de l'ordre de 35°C de manière à obtenir un bain parfaitement limpide et donc une parfaite imprégnation des pointes d'écriture par le bain , sans nécessité de filtration dudit bain.

## Revendications

1. Article d'écriture comportant de l'encre dans un réservoir fibreux ou non, un agent retardateur de séchage soluble ou dispersible dans l'encre et une pointe d'écriture apte à transférer l'encre depuis le réservoir jusqu'au support d'écriture, **caractérisé en ce qu'**un agent retardateur de séchage, est inclus dans la pointe d'écriture (7,28) et est apte à être entraîné par l'encre (5) lors de son transfert dans ladite pointe.

2. Article d'écriture selon la revendication 1,
**caractérisé en ce que** la quantité d'agent retardateur de séchage inclus dans la pointe d'écriture (7,28) est déterminée en fonction de la capacité de l'encre (5) à entraîner ledit agent, de la quantité d'encre (5) dans le réservoir (4,23) et éventuellement de la quantité d'agent retardateur contenu dans l'encre (5) en sorte qu'il reste de l'agent retardateur de séchage dans la pointe d'écriture (7,28) lorsque le réservoir (4,23) est vide d'encre.

3. Article d'écriture selon l'une des revendications 1
ou 2, **caractérisé en ce que** l'agent retardateur de séchage, notamment compatible avec une encre à base d'eau, est choisi parmi le groupe constitué par : N-phénylurée, N-éthylurée, thiourée, éthylène thiourée, diéthylèneglycol, propylèneglycol, polypropylèneglycol, un mélange de propylèneglycol et de polyglycol, sorbitol et glycérine.

4. Article d'écriture selon l'une des revendications 1
ou 2, **caractérisé en ce que** l'agent retardateur de séchage notamment compatible avec une encre à base de solvant alcoolique, est choisi parmi le groupe : cire de paraffine, cire de polyéthylène, éthylène glycol, cétyl stéarate, cétyl palmitate, stéaryl stéarate, myristate de Myristile et préférentiellement l'ester de sorbitan.

5. Article d'écriture selon l'une des revendications 1
ou 2, **caractérisé en ce que** l'agent retardateur de séchage notamment compatible à la fois avec une encre à base d'eau et une encre à base de solvant alcoolique, est choisi parmi le groupe : cire d'abeille, cire de Carnauba.

6. Procédé de fabrication d'une pointe d'écriture (7,28), spécialement conçue pour être mise en oeuvre dans l'article d'écriture (1,22) de la revendication 1 comportant les étapes suivantes :
a)Imprégnation en continu d'un élément longiforme (13) de grande capillarité par un bain (14) contenant une quantité déterminée d'un agent retardateur de séchage en sorte d'obtenir une répartition homogène dudit agent dans la section transversale de l'élément longiforme dudit bain,
b)Séchage de l'élément longiforme ainsi imprégné, ledit séchage étant réalisé en sorte que l'agent retardateur de séchage ne soit pas fixé sur l'élément longiforme mais puisse être entraîné par l'encre lors de son transfert dans la pointe d'écriture, c)Tronçonnage et usinage.

7. Procédé selon la revendication 6, **caractérisé en ce que** le bain d'imprégnation (14) est une solution concentrée de l'agent retardateur de séchage, tandis que l'encre de l'article d'écriture est une encre à base de solvant dans lequel l'agent retardateur de séchage est faiblement soluble.

8. Procédé selon l'une des revendications 6 ou 7 **caractérisé en ce qu'**il comporte plusieurs opérations successives d'imprégnation et de séchage pour obtenir une quantité d'agent retardateur de séchage dans l'élément longiforme , avant tronçonnage et usinage qui soit supérieure à la quantité déterminée.

9. Article d'écriture selon l'une des revendications 1 à 5 **caractérisé en ce que** l'agent retardateur inclus dans la pointe d'écriture est localisé majoritairement dans la périphérie de la pointe.

10. Procédé de fabrication d'une pointe d'écriture spécialement conçue pour être mise en oeuvre dans l'article d'écriture de la revendication 9 comportant les étapes suivantes :
a) imprégnation d'une pointe d'écriture déjà usinée par un bain contenant une quantité déterminée d'un agent retardateur de séchage,
b) séchage de la pointe d'écriture ainsi imprégnée, sous agitation , et par un chauffage à température inférieure ou égale à 60°C.

11. Procédé selon la revendication 10 **caractérisé en ce que** le bain d'imprégnation contient de 0,05 à 2% en poids d'agent retardateur de séchage.

12. Procédé selon la revendication 11 **caractérisé en ce que** le bain d'imprégnation contient de 0,1 à 0,5% d'ester de sorbitan.

13. Procédé selon l'une des revendications 10 à 12
**caractérisé en ce que** , l'agent retardateur étant solide à la température ambiante , la température du bain d'imprégnation est suffisante pour obtenir une solution claire , sans filtration.

14. Procédé selon la revendication 13, **caractérisé en ce que** l'agent retardateur étant l'ester de sorbitan, la température du bain d'imprégnation est de l'ordre ou supérieure à 35°C.

## Claims

1. writing article comprised of ink in a reservoir, fibrous or otherwise, a drying retardant soluble or dispersible in the ink and a writing tip capable of transferring ink from the reservoir to the writing medium, wherein said drying retardant is incorporated into the writing tip (7, 28) and is able to be carried along by the ink (5) during its transfer through said tip.

2. Writing article according to claim 1 wherein the amount of drying retardant incorporated into the writing tip (7, 28) depends on the capacity of the ink (5) to carry along said agent, the amount of ink (5) in the reservoir (4, 23) and the amount of drying retardant in the ink (5) such that some drying retardant remains in the writing tip (7, 28) when the reservoir (4, 25) is empty of ink.

3. Writing article according to one of claims 1 or 2 wherein the drying retardant, notably one compatible with water-based inks, is chosen from the group comprised of N-phenylurea, N-ethylurea, thiourea, ethylene thiourea, diethyleneglycol, propyleneglycol, polypropyleneglycol, a mixture of propyleneglycol and polyglycol, sorbitol and glycerine.

4. Writing article according to one of claims 1 or 2 wherein the drying retardant, notably one compatible with alcohol-based inks, is chosen from the group comprised of paraffin wax, polyethylene wax, ethylene glycol, cetyl stearate, cetyl palmitate, stearyl stearate, Myristile myristate and, preferably, sorbitan ester.

5. Writing article according to one of claims 1 or 2 wherein the drying retardant, notably one compatible with both water-based and alcohol-based inks, is chosen from the group comprised of beeswax and carnauba wax.

6. Process for the manufacture of a writing tip (7 28), specially designed to be used in the writing article (1, 22) described in claim 1, consisting of the following steps:
a) Continuous impregnation of a cylindrical element (13) with high capillarity in a bath (14) containing a specific amount of drying retardant such that uniform distribution of said agent in the transverse section of the cylindrical element of said bath is obtained,
b) Drying the impregnated cylindrical element, said drying process being carried out such that the drying retardant is not fixed to the cylindrical element but can be carried along by the ink during its transfer through the tip,
c) Sawing and machining.

7. Process according to claim 6 wherein the impregnation bath (14) consists of a concentrated solution of the drying retardant whereas the ink used in the writing article is an ink based on a solvent in which the drying retardant is only slightly soluble

8. Process according to one of claims 6 or 7 wherein it consists of several successive impregnation and drying steps to obtain an amount of retardant in the cylindrical element which, before sawing and machining, is greater than the given amount.

9. Writing article according to one of claims 1 to 5 wherein the drying retardant incorporated into the writing tip accumulates mainly at the edge of the tip.

10. Process for the manufacture of a writing tip, specially designed to be used in the article of claim 9, comprising the following steps:
a) Impregnation of a previously machined writing tip in an impregnation bath containing a specific amount of a drying retardant,
b) Drying the writing tip saturated in this way, with stirring, by heating to a temperature below or equal to 60°C.

11. Process according to claim 10 wherein the impregnation bath contains between 0.05 and 2% by weight of drying retardant.

12. Process according to claim 11 wherein the impregnation bath contains between 0.1 and 0.5% of sorbitan ester.

13. Process according to one of claims 10 to 12 wherein, because the drying retardant is solid at room temperature, the temperature of the impregnation bath is sufficient to obtain a clear solution, without the need for filtration.

14. Process according to claim 13 wherein, because the drying retardant is sorbitan ester, the temperature of the impregnation bath is in the region of or greater than 35°C.

## Patentansprüche

1. Schreibgerät mit Tinte in einem faserigen oder nicht faserigen Behälter, mit einem in der Tinte löslichen oder feinst verteilbaren Austrocknungsverzögerungsmittel sowie mit einer Schreibspitze, die geeignet ist, die Tinte von dem Behälter bis zum Schreibträger zu befördern, **dadurch gekennzeichnet, daß** ein Austrocknungsverzögerungsmittel in die Schreibspitze (7, 28) eingeschlossen und geeignet ist, durch die Tinte (5) bei ihrer Beförderung in der Spitze mitgeführt zu werden.

2. Schreibgerät nach Anspruch 1, **dadurch gekennzeichnet, daß** die Menge an Austrocknungsverzögerungsmittel, das in die Schreibspitze (7, 28) eingeschlossen ist, in Abhängigkeit von der Fähigkeit der Tinte (5), das Mittel mitzuführen, in Abhängigkeit der Menge an Tinte (5) in dem Behälter (4, 23) sowie eventuell in Abhängigkeit der Menge an in der Tinte (5) enthaltenem Verzögerungsmittel bestimmt wird, so daß Austrocknungsverzögerungsmittel in der Schreibspitze (7, 28) verbleibt, wenn der Behälter (4, 23) keine Tinte mehr enthält.

3. Schreibgerät nach einem der Ansprüche 1 oder 2, **dadurch gekennzeichnet, daß** das Austrocknungsverzögerungsmittel, das vor allem mit einer Tinte auf Wasserbasis kompatibel ist, aus der Gruppe bestehend aus N-Phenylharnstoff, N-Ethylharnstoff, Thioharnstoff, Ethylenthioharnstoff, Diethylenglykol, Propylenglykol, Polypropylenglykol, einer Mischung aus Propylenglykol und Polyglykol, Sorbitol und Glyzerin ausgewählt ist.

4. Schreibgerät nach einem der Ansprüche 1 oder 2, **dadurch gekennzeichnet, daß** das Austrocknungsverzögerungsmittel, das vor allem mit einer Tinte auf Basis eines alkoholischen Lösungsmittels kompatibel ist, aus der folgenden Gruppe, nämlich Paraffinwachs, Polyethylenwachs, Ethylenglykol, Cetylstearat, Cetylpalmitat, Stearylstearat, Myristylmyristat und vorzugsweise Sorbitanester ausgewählt ist.

5. Schreibgerät nach einem der Ansprüche 1 oder 2, **dadurch gekennzeichnet, daß** das Austrocknungsverzögerungsmittel, das insbesondere sowohl mit einer Tinte auf Wasserbasis als auch mit einer Tinte auf Basis eines alkoholischen Lösungsmittels kompatibel ist, aus der folgenden Gruppe, nämlich Bienenwachs, Carnaubawachs ausgewählt ist.

6. Verfahren zur Herstellung einer Schreibspitze (7, 28), die speziell für den Einsatz in dem Schreibgerät (1, 22) des Anspruchs 1 konzipiert ist, wobei das Verfahren die folgenden Schritte umfaßt:
a) kontinuierliches Imprägnieren eines Elements (13) länglicher Form mit großer Kapillarität mittels eines Bades (14), das eine bestimmte Menge eines Austrocknungsverzögerungsmittels enthält, um eine homogene Verteilung des Mittels des Bades in dem Querschnitt des länglichen Elements zu erzielen,
b) Trocknen des auf diese Weise imprägnierten länglichen Elements, wobei die Trocknung derart durchgeführt wird, daß das Austrocknungsverzögerungsmittel nicht an dem länglichen Element fixiert wird, sondern durch die Tinte während ihrer Beförderung in der Schreibspitze mitgeführt werden kann,
c) in Stücke schneiden und bearbeiten.

7. Verfahren nach Anspruch 6, **dadurch gekennzeichnet, daß** das Imprägnierungsbad (14) eine konzentrierte Lösung des Austrocknungsverzögerungsmittels ist, während die Tinte des Schreibgerätes eine Tinte auf Basis eine Lösungsmittels ist, in dem das Austrocknungsverzögerungsmittel schwach löslich ist.

8. Verfahren nach einem der Ansprüche 6 oder 7, **dadurch gekennzeichnet, daß** es mehrere aufeinanderfolgende Imprägnierungs- und Trocknungsschritte umfaßt, um vor dem Zerschneiden und Bearbeiten eine Menge an Austrocknungsverzögerungsmittel in dem länglichen Element zu erhalten, die größer als die bestimmte Menge ist.

9. Schreibgerät nach einem der Ansprüche 1 bis 5, **dadurch gekennzeichnet, daß** sich das in der Schreibspitze eingeschlossene Verzögerungsmittel hauptsächlich im Umfangsbereich der Spitze befindet.

10. Verfahren zur Herstellung einer Schreibspitze, die speziell für den Einsatz in dem Schreibgerät des Anspruchs 9 konzipiert ist, wobei das Verfahren die folgenden Schritte umfaßt:
a) Imprägnieren einer bereits bearbeiteten Schreibspitze mit einem Bad, das eine bestimmte Menge eines Austrocknungsverzögerungsmittels enthält,
b) Trocknen der auf diese Weise imprägnierten Schreibspitze unter Hin- und Herbewegen und durch ein Erhitzen auf eine Temperatur von unter oder gleich 60°C.

11. Verfahren nach Anspruch 10, **dadurch gekennzeichnet, daß** das Imprägnierungsbad zwischen 0,05 und 2 Gew.-% Austrocknungsverzögerungsmittel enthält.

12. Verfahren nach Anspruch 11, **dadurch gekennzeichnet, daß** das Imprägnierungsbad 0,1 bis 0,5 % Sorbitanester enthält.

13. Verfahren nach einem der Ansprüche 10 bis 12, **dadurch gekennzeichnet, daß** - wenn das Verzögerungsmittel bei Umgebungstemperatur fest ist - die Temperatur des Imprägnierungsbades ausreicht, um eine klare Lösung ohne Filterung zu erhalten.

14. Verfahren nach Anspruch 13, **dadurch gekennzeichnet, daß** - wenn das Verzögerungsmittel Sorbitanester ist-die Temperatur des Imprägnierungsbades in der Größenordnung von oder über 35°C liegt.
